# EUROPEAN PATENT SPECIFICATION

(11) **EP 1 627 153 B1**
(45) Date of publication and mention of the grant of the patent: **26.03.2008**
(21) Application number: 04726190.4
(22) Date of filing: 07.04.2004
(51) Int. Cl.: F16B 7/14

(54) **TELESCOPIC HANDLE**
TELESKOPGRIFF
MANCHE TELESCOPIQUE

(30) Priority: 14.04.2003 FI 20030559
(43) Date of publication of application: 22.02.2006
(73) Proprietor: Heinonen, Jussi Petteri, 25470 Kisko (FI)
(72) Inventor: Heinonen, Jussi Petteri, 25470 Kisko (FI)
(74) Representative: Laitinen, Pauli Sakari
(86) International application number: PCT/FI2004/000213
(87) International publication number: WO 2004/090349

(56) References cited:
- EP-A1- 1 106 133
- FR-A1- 2 717 539
- US-A- 2 661 850

## Description

The present invention relates to a telescopic handle.

Adjustable telescopic or extension handles are commonly used in very many applications. In cleaning implements, each user can easily adjust the length to suit their height when cleaning, in order to achieve the best working position, or to reach places overhead. In garden tools, such as pruning saws and cutters, it is possible to use a long handle to reach, for example, the tops of fruit trees, without needing a ladder. Adjustable handles are also used in other tools, such as paint rollers, swimming-pool cleaning nets, and spades carried in cars. Adjustable or extension handles can also be used in applications, in which the intention is to pack the tubes or handles into the smallest possible space during transport. Similar tubes, poles, or rods are used in umbrellas, sports equipment, fishing tackle, and camping gear, for instance, in the frames of tents. Sturdier telescopic tubes or extension handles can be used, for example, as frames for various temporary structures. Examples of such structures are the frames of canopies and advertising posters used in exhibitions. Small lampposts and flagpoles can also be made adjustable. All these applications have the common features that the adjustment of the tubes or handles has been implemented in such a way that the length can be adjusted without special tools.

One example that can be given is a steplessly adjustable telescopic handle used in cleaning implements, to which the cleaning component is attached by an articulated joint. Typically, a handle of this kind includes two aluminium tubes, one inside the other, so that the length of the telescope can be adjusted, for example, between 90 cm and 180 cm. The length of a steplessly adjustable telescopic handle is adjusted by pushing the smaller-diameter tube into the larger-diameter tube, until the desired size has been achieved. After this, the tubes are locked together by a locking mechanism.

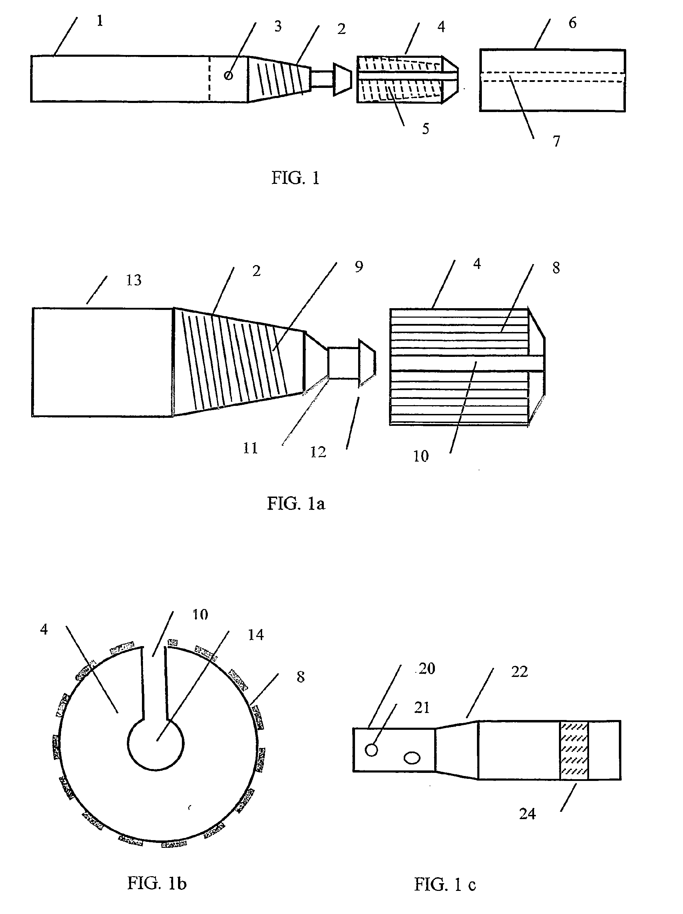

Figure 1 shows one locking mechanism according to the prior art, together with a tube. Figures 1 a and 1 b show the locking components in greater detail. A plastic, threaded male component 2 is attached to the end of the narrower tube 1. The male threaded component can be attached to the aluminium tube by pushing the part 13 of it, which is intended for attachment, into the tube and punching indentations 3 into the tube, thus locking the threaded component in place. The male threaded component has a conical external thread 9. At the end of the conical threaded part, there is a narrower neck part 11 with a larger diameter end part 12, which is intended to lock the female threaded component 4 in place.

The plastic sleeve-like female threaded component 4 has a thread 5 on its internal surface. The thread of the female component is also conical and fits into the thread of the male component. The female threaded component 4 is split 10 down one side. The split 10 allows the female threaded component to be set in place by opening the split wider than the neck part 11 and pushing the female threaded component onto the male threaded component at the neck part. The diameter of the end part 12 of the male side is larger than the hole 14 in the female threaded component, allowing the female component to remain in place.

Once the female threaded component has been set in place, the smaller-diameter tube 1 with its locking components 2, 4 is pushed into the large-diameter tube 6, so that the telescoping construction can be adjusted to the desired length. The larger-diameter external tube 6 is made by welding or drawing and its internal surface has a welding seam or ridge 7 in the longitudinal direction of the tube. In the outer surface of the female threaded component 4, there are grooves 8, into one of which the external tube's welded seam settles, thus preventing the threaded component from rotating relative to the larger-diameter external tube. The telescopic tube can be locked by rotating the external tube 6 relative to the internal tube 1, in the case of Figure 1, clockwise. Because the grooves 8 and the welded seam 7 lock the female threaded component 4 inside the external tube 6, it rotates along with the tube. The female threaded component 4 begins to travel along the conical right-handed thread 9, in which case its diameter begins to increase, causing it to press against the internal surface of the external tube 6 and lock the mutual longitudinal movement of the tubes. The split 10 in the female component permits the diameter of the female component to change. In addition, the inner tube of the telescope should be prevented from being pulled out accidentally, which is resolved, for example, by using a tight plastic sleeve fitted to the end of the outer pipe, after the telescope has been assembled.

A major problem in this type of locking according to the prior art is that it is very difficult to service. For example, in daily institutional use, the locking mechanism is subject to great stress, it dirties, its operation weakens, and it may also be damaged. If the length of the handle is continually adjusted, dirt travels into the locking mechanism. Cleaning implements are often stored vertically, with the cleaning part upwards. If there is a damp cloth, sponge, or mop in the cleaning part, dirt will flow down between the inner and outer tubes. When the telescope is adjusted, this dirt will work its way between the inner surface of the outer tube and the locking component. Adjustment of the length of the telescope may become sticky, or, on the other hand, the dirt may cause the friction locking component and the outer tube to diminish when locked, in which case locking and opening the locking will need an increasing amount of force. Locking the telescope becomes ergonomically difficult, while the use of excessive force may break the plastic locking components. Though this mechanism will also lock when rotated in the wrong direction, if this is done repeatedly it may break the plastic components. Another problem is wear in the moving locking component inside the tube. The welding seam inside the tube is typically rough and wears down the locking component inside the tube.

It is difficult to clean or repair such a telescopic-handle locking mechanism according to the prior art. The plastic sleeve that prevents the inner tube from coming out of the outer tube cannot be detached, without tools, for example, a hot-air blower. If the tubes can be separated, it should be possible to clean not only the locking component, but also the inner surface of the outer tube. Cleaning the inner surface of a narrow tube about one-metre long is a difficult operation. If the plastic male threaded component has become broken, its replacement is still difficult. The old threaded part cannot be detached, nor can the new part be put in place without tools. The old part must be broken using force, for example with a saw, to be able to remove it.

Further EP 1 106 133 A discloses a telescopic pipe, which includes an outer tube and an inner tube, whereby a male component with a conical outer surface at one end is provided on the outer surface of the inner tube and permits longitudinal movement of the inner tube therethrough and a female component with a conical portion is fitted to the end of the outer tube.

The present invention is intended to eliminate the drawbacks described above of the prior art and to develop a telescopic handle that will be easy to clean and service without tools.

In addition, the invention is intended to develop a telescopic handle that has a simple construction and cheap manufacturing costs, the locking mechanism of which has a light action, so that locking and opening the locking can be performed with one hand.

The aforementioned easy cleaning and servicing are achieved by replacing the smooth inner tube of the telescopic construction with a profiled tube and attached the telescope's locking mechanism to the end of the larger-diameter outer tube, so that it can be opened and cleaned without tools. In the construction according to the prior art, locking takes place onto the inner surface of the outer tube, which is extremely difficult to clean. In the solution according to the invention, the locking takes place onto the outer surface of the inner tube, to clean which the telescope need only be pulled out to its full length. If necessary, the tube can also be detached entirely for the duration of cleaning, without tools, by opening the locking mechanism at the end of the outer tube.

In constructions according to the prior art, there is a separate plastic sleeve at the joint between the tubes, which prevents the inner tube from coming completely out of the outer tube when adjusting the telescope. In the solution according to the invention, the telescope's locking mechanism prevents the inner tube from coming out, and no separate part is required for this, which reduces the telescope's manufacturing costs. In the solution according to the invention, there is also no need for holes or openings in either tube of the telescope, in order to implement the telescope's locking mechanism, which would also increase the machining costs.

The lightness of the locking mechanism is achieved by means of the conical portion of the locking mechanism, in which the cone is split into several parts, so that less force is required to compress the cone. This also ensures that compression takes place evenly on all sides of the profiled tube, thus correspondingly improving the friction between the tube and the cone.

In addition, the invention is intended to utilize the profiled tube used in locking, for attaching the implement part, for example, a cleaning component, to the end of the telescopic handle. This attachment too does not require holes, openings, or roughening.

The invention is characterized by the fitting together of a male threaded components and a profiled tube. Rotation of the profiled tube relative to the male-side threaded component is prevented, but longitudinal movement of the profiled tube through the threaded component is permitted. More specifically, the characteristic features of the invention are stated in Claim 1 and in greater detail in the dependent claims.

In the following, the use of the invention is described in greater detail, with reference to the accompanying figures, which show the prior art, the invention, and details of the invention, in which
- Figure 1: shows a telescopic handle according to the prior art,
- Figure 1a: shows a telescopic-handle locking mechanism, according to the prior art,
- Figure 1b: shows the female threaded component according to the prior art,
- Figure 1c: shows the lower end of the telescopic handle according to the prior art, for attaching a cleaning component,
- Figure 2: shows the locking mechanism of the telescopic handle according to the invention,
- Figure 2a: shows the male threaded component of the locking mechanism of the telescopic handle according to the invention, in greater detail,
- Figure 2b: shows a cross-section of the female locking component according to the invention,
- Figure 2c: shows a cross-section of the male locking component according to the invention,
- Figure 2d: shows a cross-section of the profiled tube of the telescopic handle according to the invention,
- Figure 3: shows the attachment mechanism of the cleaning component in a telescopic handle, according to the invention, used in a cleaning implement,
- Figure 4: shows the telescopic handle, according to the invention, used in cleaning implements, when assembled.

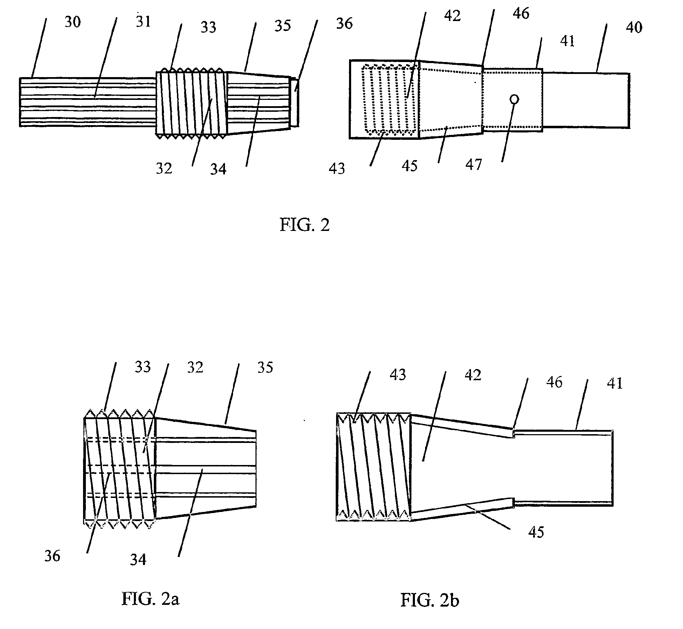

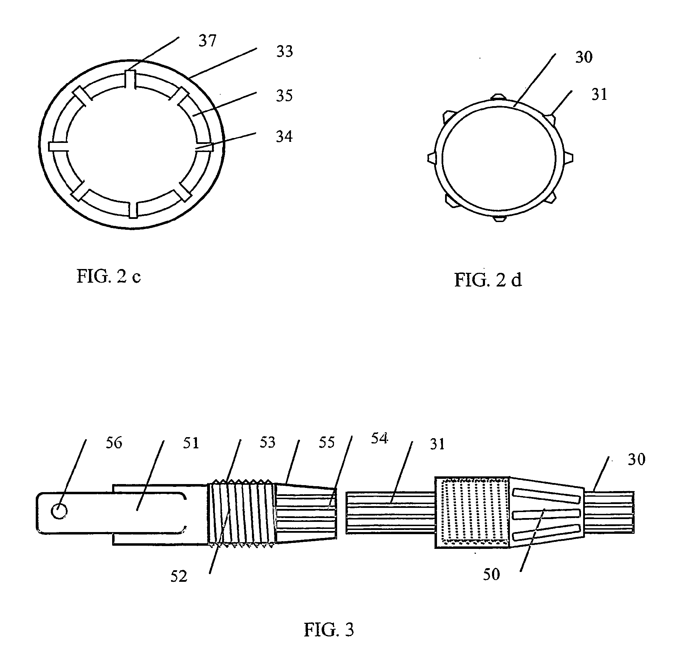

The use of the invention is not restricted to the shape of the protrusions shown in Figure 2d, instead other profiled-tube constructions can be utilized in the invention. The term 'profiled tube' used in the description refers to a tube, which has an outer surface that is not smooth, but which has longitudinal protrusions or grooves on the surface of the tube. The term profiled tube also refers to a tube with a the cross-section that may deviate from the circular, and which can be, for example, octagonal.

Figure 2 shows the telescopic tube according to the invention and its locking mechanism. A profiled tube 30, with longitudinal protrusions 31 on its outer surface, is used as the narrower inner tube. A plastic male telescope-locking component 32 is pushed on top of the profiled tube 30, from the other end of the tube. The male locking component 32 has an external thread 33 and a conical portion 35, which cone narrows towards the end of the tube. Figure 2a shows a side view, and Figure 2c an end view of the cone of the male locking component 32. On the inner surface of the locking component 32 there are grooves 37 at the threaded part 33, which become slots 34 at the conical end. There are as many slots 34 as there are protrusions 31 in the profiled tube. The width of the slots 34 is such that the protrusions 31 of the profiled tube fit into the cone's slots, thus preventing the male locking component 32 from rotating around the profiled tube 30. However, the locking component slides longitudinally along the profiled tube.

A plastic plug 36 is hammered into the end of the profiled tube. It prevents the male locking component from sliding off the end of the tube. The locking component 32 can, however, be removed from the other end of the profiled tube 30. When the telescope is assembled, the plastic plug 36 prevents the inner tube from being pulled entirely out from inside the outer tube 40. The diameter of the plastic plug 36 is slightly larger than that of the profiled tube 30, when measured from the surface of the protrusion to the surface of the protrusion. When the inner tube 30 is pushed inside the outer tube 40, the friction surface becomes the surface between the edges of the plastic plug and the inner surface of the tube, so that the tubes move relative to each other more quietly and softly. In a commonly used aluminium tube, this prevents aluminium from rubbing against aluminium.

Figure 2 also shows the female telescope-locking component 42, attached to the end of the outer tube 40. Figure 2b shows the female locking component 42 in a cross-section. On the inner surface of the locking component 42 there is a thread 43, which fits the thread 33 of the male component, there being also a conical part 45 on the inner surface. In addition, in the female locking component, there is a part 41, the inner diameter of which corresponds to the outer diameter of the outer tube 40, for attaching the locking component to the outer tube. The outer tube is pushed on, up to the end 46 of the cone. The attachment can be made, for example, by pressing indentations 47 into the tube 40, from the inside.

The telescope is assembled by pushing the inner tube 30 into the outer tube 40 and lightly rotating the male locking component 32 inside the female locking component 42. When they are tightened lightly, the locking components do not yet lock the inner tube in place, but still allow the length of the telescope to be adjusted. Once the desired length has been found, the outer tube is rotated, in the cases of the figures, further in a clockwise direction. The cone 35 pushes more tightly into the cone 45, so that the inner surface of the cone 35 is pressed against the walls of the profiled tube 30, the protrusions 31 settle into the slots 34 and the telescope locks. If a cleaning component, for example, a squeegee, which can be used to prevent the rotation of the inner tube, locking can be carried out using a single hand, because little force is needed for locking and the rotational movement is short, typically less than ½ rotation. If it is desired to adjust the length of the telescope, the outer tube is rotated anticlockwise by the same amount, to open the locking. It is characteristic of the construction, that the force needed for locking is less than the force needed for opening the locking. If it is wished to clean or service the telescope, anticlockwise rotation is continued until the male component 32 and the female component 42 separate from each other.

The profiled tube 30 can also be utilized to attach tools to the end of the telescope. Figure 1c shows a telescopic handle end 20, according to the prior art, for attaching a cleaning implement. Typically, narrowings 22, roughenings 24, and/or holes are needed for the attachment. The cleaning implement should be easily changed and should remain firmly in place, nor should the tube rotate in the attachment component when the telescope is being adjusted and the locking tightened.

Figure 3 shows a mechanism according to the invention for attaching a tool, for example a cleaning implement, to the end of the profiled tube. As far as the locking mechanism is concerned, the male component 52 is essentially the same as the male locking component 32 of the telescope. It has a thread portion 53, a conical part 55, and slots 54. An articulated part 51 is added to the locking component 52 for attaching a cleaning implement to the holes 56. As far as the thread and cone are concerned, the female part 50 corresponds in its inner surface to the locking component 42 of the telescope. The other end of the female part is, however, made in such a way that the female threaded part 50 can be rotated and moved along the profiled tube 30. The attachment part of the cleaning implement is assembled by first pushing the female part 50 onto the profiled tube, and then the male part 52 onto the end of the tube, in such a way that the protrusions 31 of the profiled tube settle into the grooves 54 of the male part. After this, the female part 50 is rotated tightly on top of the male part 52, so that the cone locks the cleaning implement onto the end of the profiled tube. During manufacture, neither end of the profiled tube requires any machining at all, to be able to implement the cleaning device's locking mechanism and the telescope locking. Holes or openings are not required at the ends of the profiled tube. However, if necessary, holes can be made in the lower end of the profiled tube, so that the handle can be used for more general purposes and components, for attaching a cleaning implement, other than those according to the present invention can be attached to it.

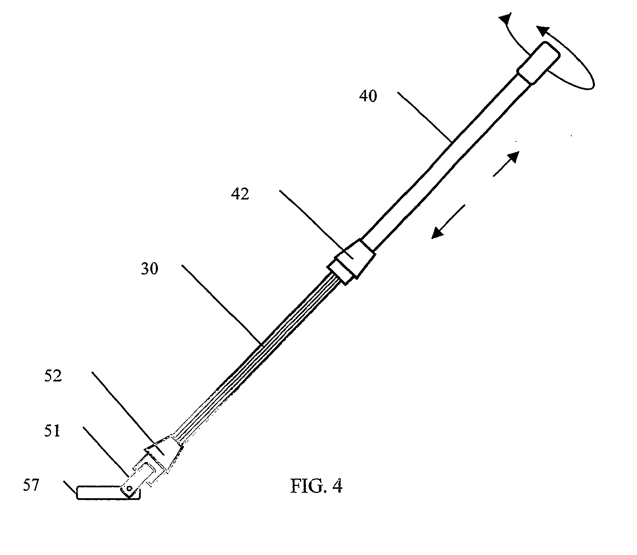

Figure 4 shows the telescopic handle according to the invention, for use in cleaning devices, in its assembled form. By using a single hand to rotate the end of the outer tube 40 anticlockwise, the locking 42 of the telescope opens, and the length of the telescope can be adjusted by pushing or pulling, so that the profiled tube 30 acting as the lower tube moves inside the outer tube. The telescope tube is locked by rotating the tube 40 clockwise. During locking and opening the locking the cleaning implement 57 can, if necessary, be supported by a foot against the floor, when it will prevent the rotation of the lower tube 30.

Though the example used in the invention is a telescopic handle used in cleaning, the invention can also be used in many other applications, in which an adjustable handle, tube, or pole is required, for example, in the applications referred to in the introduction. The telescopic tubes according to the invention are preferably of aluminium, but the profiled construction can also be implemented using plastic tubing. The threaded part of the locking mechanism are preferably of wear-resistant plastic. The description of the invention presents only a single telescope-locking component, which locks two nesting tubes together, but the invention can also be applied in such a way that there are several nesting tubes, in which case the telescope can be made longer. Each tube can then be locked using locking components according to the invention. In that case, all the tubes to be pushed inside another tube will have a profiled construction, i.e. in the case of the example, the tube 40 is also a profiled tube and is pushed inside an outer tube with a greater diameter.

## Claims

1. A telescopic handle, which includes an outer tube (40) and an inner tube (30), whereby the telescopic handle includes a profiled inner tube (30), on top of which is set a male component (32) equipped with an external thread and with a conical outer surface (35) at one end, which permits the longitudinal movement of the profiled tube (30) through the threaded male component (32) and prevents the rotation of the profiled tube (30) inside the threaded male component (32), and a female component (42), which is fitted permanently (47) to the end of the outer tube (40), and on the inner surface of which there is a thread (43) and a conical portion (45).

2. A telescopic handle according to Claim 1, **characterized in that** the cross-sectional shape of the inner surface of the male component (32) corresponds essentially to the cross-sectional shape (31) of the outer surface of the profiled tube (30).

3. A telescopic handle according to Claim 1, **characterized in that** the diameter of the conical portion (35) of the male component is arranged to be adjustable by means of slots (34).

4. A telescopic handle according to Claim 1, **characterized in that** a plastic plug (36), which has a diameter greater than the external diameter of the profiled tube (30) and greater than the internal diameter of the conical portion (35) of the male component (32), is fitted to the end of the profiled tube (30).

5. A telescopic handle according to Claim 1, **characterized in that** the profiled tube (30) includes eight protrusions (31) running in the longitudinal direction of the tube (31), the internal surface of the male component includes eight grooves (37), and the conical portion (35) of the male component (32) includes eight slots.

6. A telescopic handle according to Claim 1, **characterized in that** a second male component (52), which includes an external-thread part (53), a conical portion (55), slots (54) in the conical part (55), and a portion (51) for attaching and articulating a cleaning implement (57) to the end of the male component, and a female component (50) equipped with an internal thread, for tightening the male component to the end of the tube, is fitted to the other end of the profiled tube (30).

## Patentansprüche

1. Teleskopstiel, der ein Außenrohr (40) und ein Innenrohr (30) umfasst, wobei der Teleskopstiel ein profiliertes Innenrohr (30), auf das eine Vaterkomponente (32), an einem Ende mit einem Außengewinde und einer konischen Außenfläche (35) versehen, gesetzt ist, was die Längsbewegung des profilierten Rohrs (30) durch die mit einem Gewinde versehene Vaterkomponente (32) hindurch zulässt und die Verdrehung des profilierten Rohrs (30) innerhalb der mit einem Gewinde versehenen Vaterkomponente (32) verhindert, und eine Mutterkomponente (42) umfasst, die permanent (47) am Ende des Außenrohrs (40) angebracht ist und an deren Innenfläche es ein Gewinde (43) und einen konischen Abschnitt (45) gibt.

2. Teleskopstiel nach Patentanspruch 1, **dadurch gekennzeichnet, dass** die Querschnittsform der Innenfläche der Vaterkomponente (32) im Wesentlichen der Querschnittform (31) der Außenfläche des profilierten Rohrs (30) entspricht.

3. Teleskopstiel nach Patentanspruch 1, **dadurch gekennzeichnet, dass** der Durchmesser des konischen Abschnitts (35) der Vaterkomponente derart arrangiert ist, dass sie mit Hilfe von Schlitzen (34) verstellbar ist.

4. Teleskopstiel nach Patentanspruch 1, **dadurch gekennzeichnet, dass** ein Kunststoffpfropfen (36), der einen Durchmesser hat, der größer als der Außendurchmesser des profilierten Rohrs (30) und größer als der Innendurchmesser des konischen Abschnitts (35) der Vaterkomponente (32) ist, am Ende des profilierten Rohrs (30) angeordnet ist.

5. Teleskopstiel nach Patentanspruch 1, **dadurch gekennzeichnet, dass** das profilierte Rohr (30) acht Vorsprünge (31) aufweist, die in Längsrichtung des Rohrs (31) verlaufen, die Innenfläche der Vaterkomponente acht Rillen (37) aufweist und der konische Abschnitt (35) der Vaterkomponente (32) acht Schlitze aufweist.

6. Teleskopstiel nach Patentanspruch 1, **dadurch gekennzeichnet, dass** eine zweite Vaterkomponente (52), die einen Außengewindeteil (53), einen konischen Abschnitt (55), Schlitze (54) im konischen Abschnitt (55) und einen Abschnitt (51) zur Befestigung und Angliederung eines Reinigungsgeräts (57) am Ende der Vaterkomponente, und eine Mutterkomponente (50) aufweist, die mit einem Innengewinde zur Befestigung der Vaterkomponente am Ende des Rohrs, am anderen Ende des profilierten Rohres (30) angebracht ist.

## Revendications

1. Manche télescopique, comprenant un tube externe (40) et un tube interne (30), la manche télescopique incluant un tube interne profilé (30), sur lequel est placé un élément male (32) équipé d'un filetage externe et d'une surface externe conique (35) dans une extrémité, ce qui permet le mouvement longitudinal du tube profilé (30) à travers l'élément male profilé (32) et empêche la rotation du tube profilé (30) à l'intérieur de l'élément male profilé (32), et un élément femelle (42), qui est fixé de manière permanente (47) sur l'extrémité du tube externe (40) et sur la surface interne duquel il y a un filetage (43) et une section conique (45).

2. Manche télescopique selon la revendication 1, **caractérisé en ce que** la forme transversale de la surface interne de l'élément male (32) correspond essentiellement à la forme transversale (31) de la surface externe du tube profilé (30).

3. Manche télescopique selon la revendication 1, **caractérisé en ce que** le diamètre de la section conique (35) de l'élément male est prévu pour s'ajuster au moyen de fentes (34).

4. Manche télescopique selon la revendication 1, **caractérisé en ce qu'**une bonde plastique (36), qui a un diamètre supérieur au diamètre externe du tube profilé (30) et supérieur au diamètre interne de la section conique (35) de l'élément male (32), est ajustée à l'extrémité du tube profilé (30).

5. Manche télescopique selon la revendication 1, **caractérisé en ce que** le tube profilé (30) contient huit tubérosités (31) le long de la direction longitudinale du tube (31), la surface interne de l'élément male comportant huit encoches (37), et la section conique (35) de l'élément male (32) comporte huit fentes.

6. Manche télescopique selon la revendication 1, **caractérisé en ce qu'**un second élément male (52), qui comporte une partie externe filetée (53), une section conique (55), des fentes (54) dans la partie conique (55), et une section (51) pour fixer et articuler un instrument de nettoyage (57) à l'extrémité de l'élément male, et un élément femelle (50) équipé d'un filetage interne, pour resserrer l'élément male sur l'extrémité du tube, est ajusté à l'autre extrémité du tube profilé (30).
